# EUROPÄISCHE PATENTANMELDUNG

(11) **EP 1 132 011 A2**
(43) Veröffentlichungstag der Anmeldung: **12.09.2001**
(21) Anmeldenummer: 01810129.5
(22) Anmeldetag: 07.02.2001
(51) Int. Cl.: A23L 1/304, A23L 2/54

(54) **Verfahren zur Herstellung eines Kohlesäurehaltigen Mineralwassers**

(30) Priorität: 07.02.2000 CH 236002000
(71) Anmelder: Tellurica GmbH, 6045 Meggen (CH)
(72) Erfinder: Reto, Tietz, 6045 Meggen (CH); Franz, Schenker, 6045 Meggen (CH)

(57) **Zusammenfassung**

Für die Herstellung eines synthetischen Mineralwassers wird einem mit Kohlendioxid versetzten Trink- oder Leitungswasser ein fester oder pulverförmiger Mineralzusatz beigefügt. Die Herstellung des synthetischen Mineralwassers kann auch erfolgen, indem zuerst der feste Mineralzusatz dem Leitungs- oder Trinkwasser beigefügt wird und das Versetzen mit Kohlendioxid nachfolgend erfolgt.

## Beschreibung

Die vorliegende Erfindung betrifft ein Verfahren zum Herstellen eines kohlensäurehaltigen Mineralwassers.

Mit speziellen Geräten wird heute in Haushaltungen und im Gewerbe Kohlendioxid in Hahnen- und Trinkwasser gepresst, um sprudelndes und besser konservierbares Tafelwasser herzustellen. Das sogenannte Hahnenwasser bzw. Leitungstrinkwasser enthält in den meisten Fällen nur einen geringen Gehalt an Mineralstoffen, und insbesondere im Gebirge ist das Wasser gelegentlich derart mineralienarm, dass Mangelerscheinungen auftreten können, wie das Brechen von Fingernägeln, Knochenabbau und dergleichen.

An sich besteht in vielen Haushaltungen die Meinung, dass durch das Einpressen von Kohlendioxid in Leitungswasser Mineralwasser hergestellt wird, obwohl die Realität eine andere ist. Auf dem Markt werden verschiedene Zusätze und Sirupkonzentrate angeboten, um dem mit Kohlendioxid versetzten Wasser Aroma, Süssstoffe und/oder Fruchtbestandteile beizumischen.

Aus dem Stand der Technik sind eine Reihe von Druckschriften bekannt, welche die Erhöhung des Mineralstoffgehaltes in Wasser vorschlagen. In der WO96/29890 werden Präparate zur Erhöhung des Mineralstoffgehaltes von Wasser und Getränken beschrieben, und es werden eine Anzahl von Ionen aufgelistet, welche als portionierte Präparate in Lösung gebracht werden. Erwähnt wird, dass es vorteilhaft sein kann, den Zusätzen weitere Substanzen beizufügen, welche im Kontakt mit Wasser Kohlendioxid entwikkeln.

In der WO99/24362 werden Präparate zur Erhöhung des Mineralstoffgehaltes von Wasser zur spezifischen Behandlung von menschlichen und tierischen Krankheiten beschrieben, welche Krankheiten durch Mineralmängel hervorgerufen werden.

In der WO99/42002 wird ein Mineralzusatz mit definierter Rezeptur beschrieben zur Auflösung in destilliertem Wasser für die Behandlung von kardiovaskulären Krankheiten.

Die WO99/40801 schliesslich beschreibt einen Mineralzusatz aus Kalziumkarbonat und Magnesium-Hydroxykarbonat, welcher sich in mit Zitrussäure oder Phosphorsäure versetzten Getränken auflöst.

Die Aufgabe der vorliegenden Erfindung besteht darin, ein Verfahren zur Mineralisierung von Leitungstrinkwasser vorzuschlagen für die Herstellung eines künstlichen Mineralwassers auf einfachste Art und Weise, welches einem natürlichen Mineralwasser entspricht.

Die Aufgabe wird mittels eines Verfahrens gemäss dem Wortlaut nach Anspruch 1 gelöst.

Vorgeschlagen wird, dass das Trinkwasser bzw. Leitungswasser mit einem festen oder pulverförmigen, Mineralstoff-enthaltenden Zusatz versetzt wird, wobei vor und/oder nach der Zugabe des Zusatzes das Trinkwasser mit Kohlendioxid versetzt wird bzw. Kohlendioxid in das Trink- bzw. Leitungswasser gepresst wird.

Es hat sich erfindungsgemäss ergeben, dass die festen, pulverförmigen Mineralstoffe vorzugsweise bei einem pH-Wert < 5,5, vorzugsweise in einem Bereich von 4 bis 5, dem Trinkwasser beigegeben werden resp. vor oder nach Zugabe des festen, pulverförmigen Mineralstoffes der pH-Wert durch Zugabe von Kohlendioxidgas in den erwähnten Wertebereich eingestellt wird.

Mittels der Zugabe von Mineralien in Pulver-, Pillen oder Tablettenform in ein mit Kohlendioxid angereichertes Wasser wird künstliches Mineralwasser produziert. Bei der Reaktion mit dem Kohlendioxid-gesättigten Wasser lösen sich die Mineralien in ihre Ionen auf, und das Wasser wird mineralisiert. Von der Feststoffphase gehen die Mineralsalze in die gelöste ionische Phase über.

Dabei ist es unerheblich, ob nun zunächst das Leitungs- oder Trinkwasser mit Kohlendioxidgasen versetzt wird und in den massgeblichen pH-Bereich von ca. 4 bis 5,5, vorzugsweise 4 bis 5, eingestellt wird und die Mineralien zugegeben werden, oder ob zuerst die festen Mineralstoffe dem Leitungs- oder Trinkwasser beigefügt werden und anschliessend durch Einpressen von Kohlendioxid der erforderliche pH-Bereich eingestellt wird.

Die Hauptkomponenten des Mineralzusatzes basieren auf den Elementen Kalzium, Magnesium und Kalium, wobei diese vorzugsweise in Form von Karbonat oder bevorzugt Hydrogenkarbonat (Bikarbonat) vorliegen.

Als Nebenkomponenten können die folgenden Elemente im festen Mineralzusatz zugegen sein: Natrium, Lithium, Strontium, Chrom, Eisen und Mangan, wobei diese Elemente in der Regel in Form von Sulfaten oder Chloriden vorliegen.

Bevorzugt werden Calcit und/oder Aragonit (Kalziumkarbonat, CaCO₃), Epsomit (Magnesiumsulfat-Heptahydrat, MgSO₄*7H₂O) und/oder Kalicinit (Kaliumbikarbonat, KHCO₃) verwendet.

Gemäss der Erfindung wird vorgeschlagen, dass eine aus Mineralien bestehende Zugabe in Form von Pulver, Pillen oder Tabletten dem mit Kohlendioxid versetzten Wasser beigegeben wird, oder dass Kohlendioxid nach Zugabe der festen Mineralstoffe dem Wasser beigegeben wird. Die Mineralien lösen sich auf und geben folgende Ionen an das Wasser ab:

| | |
|---|---|
| In Mengen von 100 - 500 mg/l Wasser | Kalzium, Magnesium, Hydrogenkarbonat, Kohlendioxid |
| In Mengen von 0 - 200 mg/l Wasser | Kalium, Natrium, Lithium, Strontium, Chrom, Eisen, Mangan, Sulfat, Chlorid. |

Gemäss dem erfindungsgemäss vorgeschlagenen Verfahren kann somit aus Leitungswasser ein Lebensmittel hergestellt werden, dessen zugefügte Inhaltsstoffe eine wichtige Rolle im Energiestoffwechsel und beim Skelettaufbau spielen. Die beigefügten Mineralstoffe sind auch wesentlich für die Nervenfunktion und die Muskelkontraktion von Menschen und Säugetieren.

Die Erfindung wird nun anhand des nachfolgenden Beispiels exemplarisch als Ausführungsvariante der Erfindung näher erläutert.

### Ausführungsbeispiel des erfindungsgemässen Verfahrens:

Das verwendete Mineralgemisch besteht aus folgenden Mineralien und Mengen:
- 500 mg Calcit (CaCO₃)
- 500 mg Epsomit (MgSO₄*7H₂O)
- 50 mg Kalicinit (KHCO₃)

Das Leitungswasser bzw. Trinkwasser wird mittels einer handelsüblichen Soda-Maschine mit Kohlendioxidgas versetzt und erreicht so einen pH-Wert im Bereich von 4,5 - 5.

Das Mineralgemisch wird dem angesäuerten Wasser zugegeben, und es finden folgende Lösungsvorgänge statt:

- CaCO + H¹ = Ca² +HCO₃¹⁻

- MgSO₄*7H₂O = Mg²⁺ + SO₄ ²⁻*7H₂O

- KHCO₃ = K¹⁺ + HCO₃¹⁻

Ein für den Versuch verwendetes Leitungswasser der Trinkwasserversorgung Meggen, Kanton Luzern, Schweiz, wird somit folgendermassen mineralisiert, was analytisch nachgewiesen wurde:

| **Ion** | **A)** **Hahnenwasser (Analysen)** | **B)** **Zugabe (stöchiom.)** | **C)** **Mineralwasser (Analysen)** | **D) = C) - A)** **Gelöst** | **B) - D)** **fest** |
|---|---|---|---|---|---|
| Ca²⁺ | 51.22 mg/l | 200.00 mg | 243.38 mg/l) | 192.16 mg/l | 7.84 mg/l |
| Mg²⁺ | 2.11 mg/l | 48.75mg | 50.91 mg/l | 48.80 mg/l | 0.05 mg/l |
| K¹⁺ | 0.59 mg/l | 19.50 mg | 19.85 mg/l | 19.26 mg/l | 0.24 mg/l |
| HCO₃¹⁻ | 84.15 mg/l | 330.50 mg | 390.88 mg/l | 306.73 mg/l | 23.77 mg/l |
| SO₄²⁻ | < 20.00 mg/l | 195.00 mg | 233.75 mg/l | 195.00 mg/l | 0 mg/l |
| H₂O | keine | 256.25 mg | keine | 256.25 mg/l | 0 mg/l |
| **Total** | | **1'050.00 mg** | | **1'018.2 mg/l** | **31.9 mg/l** |

Im Filterrückstand des Mineralwassers wurde eine Menge von 0,40 mg festgestellt. Der Rest der Festsubstanz bleibt beim Umschütten von der Mineralwasserflasche in der Probeflasche zurück.

Das erfindungsgemäss vorgeschlagene Verfahren unterscheidet sich von bekannten Verfahren durch die folgenden Vorteile:
- Die Bestandteile der Zugabe bestehen aus natürlich vorkommenden, festen Mineralien wie Calcit, Aragonit, Epsomit und Kalicinit.
- Der Hauptbestandteil des Mineralgemisches (Calcit) löst sich nur unter sauren Bedingungen, d.h. z.B. in CO₂-gesättigtem Wasser, auf.
- Die Rezeptur des Mineralzusatzes ist so konzipiert, dass:
   - sich die Mineralien möglichst vollständig auflösen;
   - bei einer Minimierung von unerwünschten Ionen (z.B. Nitrat und Chlorid) insbesondere gesundheitsfördernde Ionen (z.B. Kalzium, Kalium, Magnesium) vorhanden sind;
   - der Mineralgehalt an gesundheitsfördernden Mineralien des daraus entstehenden Mineralwassers einem durchschnittlichen natürlichen Mineralwasser entspricht.

Das vorab beschriebene Beispiel eines erfindungsgemässen Verfahrens dient insbesondere der Erläuterung und soll exemplarisch den Grundgedanken der Erfindung darlegen. Selbstverständlich ist die Erfindung keinesfalls auf das angeführte Beispiel beschränkt, sondern die Erfindung bezieht sich auf irgendwelche geeignete Mineralzusätze, welche ebenfalls in natürlichen Mineralwässern vorhanden sind, wobei diese Mineralzusätze einem Leitungs- bzw. Trinkwasser beigefügt werden, welches vor oder nach der Zugabe der Mineralzusätze mit Kohlendioxid versetzt wird.

## Patentansprüche

1. Verfahren zum Herstellen eines kohlensäurehaltigen Mineralwassers, **dadurch gekennzeichnet**, dass Leitungswasser resp. Trinkwasser mit einem festen, Mineralstoff-enthaltenden Zusatz versetzt wird, wobei vor und/oder nach der Zugabe des Zusatzes das Trink- oder Leitungswasser mit Kohlendioxid versetzt wird.

2. Verfahren, insbesondere nach Anspruch 1, **dadurch gekennzeichnet**, dass der feste Mineralstoff in Pulverform, als Pille oder Tablette dem Trink- oder Leitungswasser hinzugefügt wird.

3. Verfahren, insbesondere nach einem der Ansprüche 1 oder 2, **dadurch gekennzeichnet**, dass das Versetzen mit Kohlendioxid durch Einpressen von Kohlendioxidgas in das Leitungs- bzw. Trinkwasser erfolgt.

4. Verfahren, insbesondere nach einem der Ansprüche 1 bis 3, **dadurch gekennzeichnet**, dass das Trink- oder Leitungswasser durch Zusetzen des Kohlendioxides auf einen pH-Wert < ca. 5,5 eingestellt wird, vorzugsweise in einem Bereich von ca. 4 bis 5.

5. Verfahren, insbesondere nach einem der Ansprüche 1 bis 4, **dadurch gekennzeichnet**, dass das Leitungs- oder Trinkwasser durch das Versetzen mit Kohlendioxid auf einen pH-Wert von ca. 4,5 bis 5 eingestellt wird.

6. Verfahren, insbesondere nach einem der Ansprüche 1 bis 5, **dadurch gekennzeichnet**, dass der Mineralzusatz mindestens ein Element ausgewählt aus der nachfolgenden Liste enthält:
Kalzium, Magnesium und/oder Kalium, wobei das oder die Elemente vorzugsweise in Form von Karbonat bzw. in Form von Hydrogenkarbonat bzw. Bikarbonat vorliegt.

7. Verfahren, insbesondere nach einem der Ansprüche 1 bis 6, **dadurch gekennzeichnet**, dass der Zusatz Elementen ausgewählt aus der nachfolgenden Liste enthalten kann:
Natrium, Lithium, Strontium, Chrom, Eisen und/oder Mangan,
wobei das oder die enthaltenen Elemente beispielsweise in Form eines Sulfates oder Chlorides vorliegen.

8. Verfahren, insbesondere nach einem der Ansprüche 1 bis 7, **dadurch gekennzeichnet**, dass als Hauptkomponente bzw. Hauptkomponenten im Zusatz mindestens eines der folgenden Mineralien enthalten ist:
Calcit und/oder Aragonit (Kalziumkarbonat), Epsomit (Magnesiumsulfat-Heptahydrat) und/oder Kalicinit (Kaliumbikarbonat).

9. Verfahren, insbesondere nach einem der Ansprüche 1 bis 8, **dadurch gekennzeichnet**, dass die Mineralien in Form von Pulver, Pillen oder Tabletten dem Leitungs- bzw. Trinkwasser in Mengen von 0 - 1500 mg/l Wasser beigefügt werden.

10. Verwendung des Verfahrens nach einem der Ansprüche 1 bis 9 zur Herstellung eines medizinischen Mineralwassers für die Behandlung von Energiestoffwechselstörungen, für die Förderung des Skelettaufbaus, für die Erhöhung der Nervenfunktion sowie der Muskelkontraktion von Menschen und Säugetieren.
